# EUROPÄISCHE PATENTSCHRIFT

(11) **EP 3 216 838 B1**
(45) Veröffentlichungstag und Bekanntmachung des Hinweises auf die Patenterteilung: **01.04.2026**
(21) Anmeldenummer: 17154746.6
(22) Anmeldetag: 06.02.2017
(51) Int. Cl.: C09J 7/10, C09J 7/22, C09J 7/38

(54) **VERBUNDSYSTEM MIT SCHWACH KLEBENDEM ABDECKMATERIAL**
COMPOSITE SYSTEM WITH MASKING MATERIAL HAVING LOW ADHESION
SYSTÈME COMPOSITE AVEC UN MATÉRIAU DE REVÊTEMENT À FAIBLE ADHÉSION

(30) Priorität: 10.03.2016 DE 102016203910; 28.11.2016 DE 102016223550
(43) Veröffentlichungstag der Anmeldung: 13.09.2017
(73) Patentinhaber: tesa SE, 22848 Norderstedt (DE)
(72) Erfinder: ELLRINGMANN, Ute, 22589 Hamburg (DE); GEELINK, Martin, 22453 Hamburg (DE); YANG-VOSS, Jian, 20253 Hamburg (DE)
(74) Vertreter: tesa SE

(56) Entgegenhaltungen:
- EP-A1- 0 760 389
- EP-A2- 1 035 185

## Beschreibung

Die Erfindung betrifft allgemein das technische Gebiet der Klebebänder, wie sie vielfältig zum temporären oder langfristigen Verbinden oder Abdecken einer Vielzahl von Substraten, beispielsweise von Bauteilen, verwendet werden. Spezifischer betrifft die Erfindung ein Verbundsystem, das zwei verschiedenartig ausgestattete Klebebänder umfasst, wobei eines der Klebebänder als sogenannter Interliner fungieren und im Wesentlichen das dimensionsstabile Aufwickeln und eine stabile Lagerung des anderen Klebebandes ermöglichen soll.

Klebebänder umfassen häufig ein ein- oder beidseitig mit Klebmasse ausgerüstetes Substrat. Ihre Nutzung erlaubt ein einfaches, schnelles und inzwischen auch sehr leistungsstarkes Verkleben auf einer Reihe von Substraten. Häufig geht es darum, sehr verschiedenartige Substrate miteinander zu verbinden. In diesem Fall kann es vorteilhaft sein, wenn man über ein beidseitig mit Klebmasse versehenes Klebeband verfügt und die beiden Klebmassen unterschiedliche Eigenschaften haben.

Beispielsweise sind Poly(meth)acrylat-basierte Haftklebmassen bekannt, die auf einer Reihe von Substraten hohe Klebkräfte erbringen und sich überdies durch die langfristige Stabilität der klebenden Verbindung unter verschiedenen äußeren Bedingungen auszeichnen. Andererseits sind auch hitzeaktivierbare Klebmassen in den Fokus des Interesses gerückt. Dabei handelt es sich häufig um Polyolefine, die insbesondere sowohl auf thermo- als auch auf duroplastischen Substraten leistungsstarke Verklebungen ermöglichen. Im Falle thermoplastischer Substrate können sowohl die Klebmasse als auch das Substrat in geschmolzenem bzw. erweichtem Zustand vorliegen, so dass es oberflächlich zu einer gegenseitigen Durchdringung der Materialien kommen kann. Dies führt nach Abkühlung zu hochstabilen Verbindungen. Im Falle duroplastischer Substrate kann die geschmolzene hitzeaktivierte Klebmasse das Substrat sehr gut benetzen, was ebenfalls nach dem Abkühlen zu guten Klebkräften führt.

Doppelseitige Klebebänder mit unterschiedlichen Klebmassen sind beispielsweise in EP 0 384 598 A1 beschrieben. Konkret offenbart die Schrift ein Klebeband mit einer Schicht, die einen hitzeaktivierbaren Polyolefinklebstoff enthält, auf den mittels Graft-Polymerisation ein Polymerisat aus ausgewählten Acrylmonomeren aufgebracht ist. Weiter umfasst das Klebeband eine UV-polymerisierte Acrylat-Haftklebeschicht, die auch unter Wärmeeinwirkung an der hitzeaktivierbaren Schicht haftet.

Ein ähnlicher Aufbau ist in US 4,563,388 A beschrieben.

EP 1 262 532 A1 beschreibt ein Klebeband, das eine hitzeaktivierbare Klebstoffschicht auf Basis eines Polymers aus einem oder mehreren Olefinmonomeren und eine Haftklebstoffschicht auf Basis eines Polyacrylathaftklebstoffs umfasst. Die Haftklebstoffschicht ist direkt und dauerhaft an die hitzeaktivierbare Schicht gebunden.

Klebebänder, die ein- oder beidseitig mit Klebstoffen beschichtet sind, werden am Ende des Herstellungsprozesses zumeist zu einer Rolle oder einer Spule aufgewickelt. Um bei doppelseitig klebenden Klebebändern zu verhindern, dass die Haftklebmassen miteinander in Kontakt kommen, oder um bei einseitig klebenden Klebebändern ein leichteres Abrollen zu gewährleisten, wird die Klebmasse vor dem Wickeln des Klebebandes mit einem Abdeckmaterial (auch als Trennmaterial bezeichnet) bedeckt. Derartige Abdeckmaterialien sind unter den Namen "Releaseliner" oder "Liner" bekannt. Neben der Abdeckung von ein- oder doppelseitig klebenden Klebebändern werden Liner auch zur Eindeckung von Etiketten eingesetzt.

Diese Releaseliner sorgen des Weiteren dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgen die Releaseliner zusätzlich dafür, dass beim Abrollen die richtige Seite der Klebemasse zuerst freigelegt wird.

Ein Liner oder Releaseliner ist nicht Bestandteil eines Klebebandes oder Etiketts, sondern nur ein Hilfsmittel zu deren Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Doppelseitige Klebebänder, die eine Haftklebmasseschicht und eine hitzeaktivierbare Klebstoffschicht umfassen und deren Haftklebmasseschicht mit einem Releaseliner abgedeckt ist, werden in der Regel zu einer kreuzgewickelten Langrolle, auch Spule genannt, aufgewickelt und daher bei ihrer Herstellung und Lagerung auf der Seite der hitzeaktivierbaren Schicht häufig mit einem weiteren Releaseliner versehen. Dieser häufig als "Hilfsliner" oder auch als "Interliner" bezeichnete weitere Releaseliner weist gegenüber der Breite des Klebebandes in der Regel beiderseits einen Überstand auf und kann daher u.a. ein Miteinanderverkleben der Seitenkanten des aufgewickelten Klebebandes, auch Verblocken genannt, verhindern.

Bei den beschriebenen Klebebändern, die eine Haftklebmasseschicht und eine hitzeaktivierbare Klebstoffschicht umfassen und deren Haftklebmasseschicht mit einem Releaseliner abgedeckt ist, ergibt sich allerdings auch die Besonderheit, dass der Verbund aus Klebeband und haftklebmassenseitigem Releaseliner auf beiden Seiten nichtklebend ist. Durchläuft ein solcher Verbund mit auf der Seite der hitzeaktivierbaren Schicht aufliegendem Interliner als bahnförmiges Material ein Schneidwerk und/oder wird er zur Spule aufgewickelt, kann er häufig nicht stabil über den Weg geführt werden. Insbesondere an Umlenkrollen und auf längeren ungeführten Strecken separiert sich der Interliner vom verbleibenden Verbund. Darüber hinaus kommt es bei Lagerung und Transport der Klebebänder oft zu einem Verrutschen der Interliner und damit verbunden zu Beschädigungen der Klebebandoberflächen.

Aufgabe der vorliegenden Erfindung ist es, hier Abhilfe zu schaffen und die eben beschriebenen Nachteile zu vermeiden. Insbesondere soll es ermöglicht werden, doppelseitige Klebebänder, die eine mit einem üblichen Releaseliner versehene Haftklebmasseseite und eine hitzeaktivierbare Klebeschicht aufweisen, mit einem Interliner auf der hitzeaktivierbaren Seite zu schützen, ohne dass die Stabilität der Führung durch die üblichen Schneid- und Wickelanlagen nachteilig beeinflusst wird. Zudem sollen eine stabile Lagerung und ein stabiler Transport dieser Klebebänder ermöglicht und die Gefahr von Oberflächenbeschädigungen minimiert werden.

Ein erster und allgemeiner Gegenstand der Erfindung ist ein Verbundsystem, das
- ein Klebeband (A), welches
   - eine Haftklebmasseschicht und
   - eine hitzeaktivierbare Klebmasseschicht enthält;
- einen auf der Haftklebmasseschicht des Klebebandes (A) aufliegenden Releaseliner; und
- ein Klebeband (B), welches
   - ein Trägermaterial,
   - eine Trennschicht auf einer Seite des Trägermaterials und
   - eine Haftklebmasseschicht auf der der Trennschicht gegenüberliegenden Seite des Trägermaterials enthält;
umfasst;
wobei sich die Haftklebmasseschicht des Klebebandes (B) in unmittelbarem Kontakt mit der hitzeaktivierbaren Klebmasseschicht des Klebebandes (A) befindet und das Klebeband (B) zu der hitzeaktivierbaren Klebmasseschicht des Klebebandes (A) eine Klebkraft von maximal 5 N/cm, ermittelt nach EN 1939:2003, aufweist.

Ein derartiges System umfasst also ein doppelseitiges Klebeband mit einer Haftklebmasse und einer hitzeaktivierbaren Klebmasse sowie einen auf der Haftklebmasse aufliegenden Releaseliner und ein gegenüber der hitzeaktivierbaren Klebmasse schwach klebendes Klebeband, welches rückseitig Release-beschichtet ist und somit als Interliner im oben beschriebenen Sinne fungiert. Der einseitig - wenn auch vergleichsweise schwach - klebend ausgestaltete Interliner bewirkt vorteilhaft eine wesentlich stabilere Verbindung zwischen der bei Raumtemperatur und üblichen Lagerungstemperaturen nichtklebrigen, hitzeaktivierbaren Schicht und dem Interliner, so dass ein Verrutschen des Interliners und die dadurch ermöglichte Beschädigung der Oberfläche des doppelseitigen Klebebandes während der Führung durch Schneid- und Wickelanlagen sowie während des Transportes und der Lagerung wesentlich erschwert wird. Nichtsdestotrotz erfüllt der Interliner nach wie vor seine eigentliche Aufgabe, nämlich einen Schutz vor dem Verkleben der Seitenkanten des doppelseitigen Klebebandes zu bieten, und er lässt sich mit geringem Kraftaufwand vor der Applikation des doppelseitigen Klebebandes von diesem entfernen.

Unter einer Haftklebemasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs, der Temperatur und der Luftfeuchtigkeit sowie des Substrats, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebemassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.

Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) •sin(δ) (τ = Schubspannung, γ = Deformation, δ = Phasenwinkel = Phasenverschiebung zwischen Schubspannungs- und Deformationsvektor).

Eine Masse gilt im Allgemeinen als Haftklebemasse und wird im Sinne der Erfindung als solche definiert, wenn bei 23°C im Deformationsfrequenzbereich von 10⁰ bis 10¹ rad/sec sowohl G' als auch G" zumindest zum Teil im Bereich von 10³ bis 10⁷ Pa liegen. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird, und wenn zumindest ein Abschnitt der G"-Kurve ebenfalls innerhalb des entsprechenden Fensters liegt.

Die Materialbasis der Haftklebmasseschicht des Klebebandes (A) (im Folgenden auch synonym als "Haftklebmasse des Klebebandes (A)" bezeichnet) ist grundsätzlich beliebig, solange die Verträglichkeit mit den weiteren Komponenten des erfindungsgemäßen Verbundsystems und die Funktion als Haftklebmasse gewährleistet ist.

Die Haftklebmasseschicht des Klebebandes (A) enthält bevorzugt Poly(meth)acrylat als Hauptbestandteil. Unter "Poly(meth)acrylat" wird ein Polymer verstanden, dessen Monomerbasis zu mindestens 70 Gew.-% aus Acrylsäure, Methacrylsäure, Acrylsäureestern und/oder Methacrylsäureestern besteht, wobei Acrylsäureester und/oder Methacrylsäureester zu mindestens 50 Gew.-% enthalten sind, jeweils bezogen auf die gesamte Monomerenzusammensetzung des betreffenden Polymers. Poly(meth)acrylate sind allgemein durch radikalische Polymerisation von Acryl- und/oder Methylacrylmonomeren sowie gegebenenfalls weiteren copolymerisierbaren Monomeren zugänglich. Der Begriff "Poly(meth)acrylat" umfasst erfindungsgemäß sowohl Polymere auf Basis von Acrylsäure und deren Derivaten als auch solche auf Basis von Acrylsäure und Methacrylsäure und deren Derivaten als auch solche auf Basis von Methacrylsäure und deren Derivaten. Die Haftklebmasse des Klebebandes (A) kann ein oder mehrere Poly(meth)acrylat(e) enthalten. Sofern mehrere Poly(meth)acrylate enthalten sind, bezieht sich "Hauptbestandteil" auf die Gesamtheit der Poly(meth)acrylate.

Eine Poly(meth)acrylat-basierte Haftklebmasse weist vorteilhaft hohe Klebkräfte zu einer Reihe von Substraten auf und zeichnet sich ferner durch hohe Stabilität gegenüber Umwelteinflüssen sowie über lange Zeiträume aus.

Bevorzugt umfasst das Klebeband (A) eine geschäumte Haftklebmasseschicht (im Folgenden auch synonym als "geschäumte Haftklebmasse" bzw. "geschäumte Haftklebmasse des Klebebandes (A)" bezeichnet). Unter einer "geschäumten Haftklebmasse" wird eine Haftklebmasse verstanden, die ein haftklebriges Matrixmaterial und mehrere gasgefüllte Hohlräume umfasst, so dass die Dichte dieser Haftklebmasse im Vergleich zum bloßen Matrixmaterial ohne Hohlräume verringert ist. Die Schäumung des Matrixmaterials der geschäumten Haftklebmasse kann grundsätzlich auf jede beliebige Art und Weise bewirkt werden. Bevorzugt enthält die geschäumte Haftklebmasseschicht des Klebebandes (A) zumindest teilweise expandierte Mikrohohlkugeln. Darunter werden zumindest teilweise expandierte Mikrokugeln verstanden, die in ihrem Grundzustand elastisch und expandierbar sind und eine thermoplastische Polymerhülle aufweisen. Diese Kugeln sind - im Grundzustand - mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan gebräuchlich, die als verflüssigtes Gas unter Druck in der Polymerhülle eingeschlossen sind. Für derartige Mikrokugeln ist auch der Begriff "Mikroballons" gebräuchlich.

Durch Wärmeeinwirkung auf die Mikroballons erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Unexpandierte Mikroballontypen sind auch als wässrige Dispersion mit einem Feststoff- beziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die unexpandierten Mikroballons als solche zur Herstellung der erfindungsgemäßen geschäumten Haftklebmasse des Klebebandes (A) geeignet.

Die geschäumte Haftklebmasse kann auch mit sogenannten vorexpandierten Mikrohohlkugeln erzeugt werden. Bei dieser Gruppe findet die Expansion schon vor der Einmischung in die Polymermatrix statt.

Erfindungsgemäß bevorzugt enthält die geschäumte Haftklebmasseschicht des Klebebandes (A) unabhängig vom Herstellungsweg und von der eingesetzten Ausgangsform der Mikrohohlkugeln zumindest teilweise expandierte Mikrohohlkugeln. Besonders bevorzugt weisen mindestens 90 % aller von den Mikrohohlkugeln gebildeten Hohlräume der geschäumten Haftklebmasse des Klebebandes (A) eine maximale Ausdehnung von 10 bis 500 µm, stärker bevorzugt von 15 bis 200 µm, auf.

Der Begriff "zumindest teilweise expandierte Mikrohohlkugeln" wird erfindungsgemäß so verstanden, dass die Mikrohohlkugeln zumindest soweit expandiert sind, dass damit eine Dichteverringerung der Haftklebmasse in einem technisch sinnvollen Ausmaß im Vergleich zu derselben Klebmasse mit den unexpandierten Mikrohohlkugeln bewirkt wird. Dies bedeutet, dass die Mikroballons nicht zwingend vollständig expandiert sein müssen. Bevorzugt sind die "mindestens teilweise expandierten Mikrohohlkugeln" jeweils auf mindestens das Doppelte ihrer maximalen Ausdehnung im unexpandierten Zustand expandiert.

Der Ausdruck "zumindest teilweise expandiert" bezieht sich auf den Expansionszustand der individuellen Mikrohohlkugeln und soll nicht ausdrücken, dass nur ein Teil der in Betracht kommenden Mikrohohlkugeln (an)expandiert sein muss. Wenn also "zumindest teilweise expandierte Mikrohohlkugeln" und unexpandierte Mikrohohlkugeln in der Klebmasse enthalten sind, dann bedeutet dies, dass unexpandierte (gar nicht expandierte, also auch nicht anexpandierte) Mikrohohlkugeln nicht zu den "zumindest teilweise expandierten Mikrohohlkugeln" gehören.

Die geschäumte Haftklebmasse des Klebebandes (A) enthält bevorzugt Poly(meth)acrylat als Hauptbestandteil. Dies ist wie vorstehend für die Haftklebmasse des Klebebandes (A) beschrieben zu verstehen.

Bevorzugt kann das Poly(meth)acrylat der geschäumten Haftklebmasse des Klebebandes (A) auf die folgende Monomerzusammensetzung zurückgeführt werden:
a) Acrylsäureester und/oder Methacrylsäureester der Formel (I)

   CH₂ = C(R^{I})(COOR^{II}) (I),

   worin R^{I} = H oder CH₃ und R^{II} ein Alkylrest mit 4 bis 14 C-Atomen, besonders bevorzugt mit 4 bis 9 C-Atomen, ist;
b) olefinisch ungesättigte Monomere mit funktionellen Gruppen, die eine Reaktivität mit Vernetzersubstanzen aufweisen;
c) optional weitere olefinisch ungesättigte Monomere, die mit den Monomeren (a) und (b) copolymerisierbar sind.

Die Anteile der Monomere a), b), und c) sind besonders bevorzugt derart gewählt, dass das Poly(meth)acrylat eine Glastemperatur von ≤ 15 °C (DMA bei geringen Frequenzen) aufweist. Dazu ist es vorteilhaft, die Monomere a) mit einem Anteil von 45 bis 99 Gew.-%, die Monomere b) mit einem Anteil von 1 bis 15 Gew.-% und die Monomere c) mit einem Anteil von 0 bis 40 Gew.-% zu wählen, jeweils bezogen auf die gesamte Monomerenzusammensetzung des Poly(meth)acrylats.

Die Monomere a) sind besonders bevorzugt weichmachende und/oder unpolare Monomere. Vorzugsweise sind die Monomere a) daher ausgewählt aus der Gruppe umfassend n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, Isobutylacrylat, Isooctylacrylat, Isooctylmethacrylat, 2-Ethylhexylacrylat und 2-Ethylhexylmethacrylat.

Die Monomere b) sind bevorzugt olefinisch ungesättigte Monomere mit funktionellen Gruppen, die eine Reaktion mit Epoxidgruppen eingehen können. Besonders bevorzugt enthalten die Monomere b) jeweils mindestens eine funktionelle Gruppe ausgewählt aus der Gruppe bestehend aus Hydroxy-, Carboxy-, Sulfonsäure- und Phosphonsäuregruppen, Säureanhydridfunktionen, Epoxidgruppen und substituierten oder unsubstituierten Aminogruppen.

Insbesondere sind die Monomere b) ausgewählt aus der Gruppe bestehend aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, 2-Hydroxyethylacrylat, 3-Hydroxypropylacrylat, 2-Hydroxyethylmethacrylat, 3-Hydroxypropylmethacrylat, 6-Hydroxyhexylmethacrylat, Allylalkohol, Glycidylacrylat und Glycidylmethacrylat.

Als Monomere c) kommen prinzipiell alle vinylisch funktionalisierten Verbindungen in Frage, die mit den Monomeren a) und den Monomeren b) copolymerisierbar sind. Mit Auswahl und Menge der Monomere c) lassen sich vorteilhaft Eigenschaften der geschäumten Haftklebmasse des Klebebandes (A) regulieren.

Die Monomere c) sind besonders bevorzugt ausgewählt aus der Gruppe bestehend aus Methylacrylat, Ethylacrylat, n-Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, tert-Butylphenylacrylat, tert-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, 2-Butoxyethylmethacrylat, 2-Butoxyethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofurfurylacrylat, Diethylaminoethylacrylat, Diethylaminoethylmethacrylat, Dimethylaminoethylacrylat, Dimethylaminoethylmethacrylat, , 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylenglycolacrylat, Ethylenglycolmonomethylacrylat, Methoxy-Polyethylenglykolmethacrylat 350, Methoxy-Polyethylenglykolmethacrylat 500, Propylenglycolmonomethacrylat, Butoxydiethylenglykolmethacrylat, Ethoxytriethylenglykolmethacrylat, Octafluoropentyl-acrylat, Octafluoropentylmethacrylat, 2,2,2-Trifluoroethylmethacrylat, 1,1,1,3,3,3-Hexa-fluoroisopropylacrylat, 1,1,1,3,3,3-Hexafluoroisopropylmethacrylat, 2,2,3,3,3-Pentafluoro-propylmethacrylat, 2,2,3,4,4,4-Hexafluorobutylmethacrylat, 2,2,3,3,4,4,4-Heptafluoro-butylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, N,N-Dialkyl-substituierten Amiden, insbesondere N,N-Dimethylacrylamid, N,N-Dimethylmethacrylamid, N-Benzylacrylamid, N-Isopropylacrylamid, N-tert-Butylacrylamid, N-tert-Octylacrylamid, N-Methylolacrylamid, N-Methylolmethacrylamid; weiter Acrylnitril, Methacrylnitril; Vinylethern wie Vinylmethylether, Ethylvinylether, Vinylisobutylether; Vinylestern wie Vinylacetat; Vinylchlorid, Vinylhalogeniden, Vinylidenhalogeniden, Vinylpyridin, 4-Vinylpyridin, N-Vinylphthalimid, N-Vinyllactam, N-Vinylpyrrolidon, Styrol, α- und p-Methylstyrol, α-Butylstyrol, 4-n-Butylstyrol, 4-n-Decylstyrol, 3,4-Dimethoxystyrol, 2-Polystyrolethylmethacrylat (Molekulargewicht Mw von 4000 bis 13000 g/mol) und Poly(Methylmethacrylat)ethylmethacrylat (Mw von 2000 bis 8000 g/mol).

Die Monomere c) können vorteilhaft auch derart gewählt werden, dass sie funktionelle Gruppen enthalten, die eine strahlenchemische Vernetzung (beispielsweise durch Elektronenstrahlen oder UV) unterstützen. Geeignete copolymerisierbare Photoinitiatoren sind z.B. Benzoinacrylat und acrylatfunktionalisierte Benzophenonderivate. Monomere, die eine Vernetzung durch Elektronenbestrahlung unterstützen, sind z.B. Tetrahydrofurfurylacrylat, N-tert-Butylacrylamid und Allylacrylat.

Besonders bevorzugt sind, sofern die geschäumte Haftklebmasse des Klebebandes (A) mehrere Poly(meth)acrylate enthält, alle Poly(meth)acrylate der geschäumten Haftklebmasse des Klebebandes (A) auf die vorstehend beschriebene Monomerenzusammensetzung zurückzuführen. Insbesondere sind alle Poly(meth)acrylate der geschäumten Haftklebmasse des Klebebandes (A) auf eine Monomerenzusammensetzung bestehend aus Acrylsäure, n-Butylacrylat und Methylacrylat zurückzuführen.

Insbesondere ist das Poly(meth)acrylat bzw. sind alle Poly(meth)acrylate der geschäumten Haftklebmasse des Klebebandes (A) auf die folgende Monomerenzusammensetzung zurückzuführen:

| | |
|---|---|
| Acrylsäure | 3 - 15 Gew.-% |
| Methylacrylat | 10 - 35 Gew.-% |
| 2-Ethylhexylacrylat | 50 - 87 Gew.-%, |

wobei sich die Anteile der Monomeren zu 100 Gew.-% addieren.

Die Poly(meth)acrylate können durch radikalische Polymerisation der Monomere in Lösungsmitteln, insbesondere in Lösungsmitteln mit einem Siedebereich von 50 bis 150 °C, vorzugsweise von 60 bis 120 °C, unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegen, hergestellt werden.

Prinzipiell eignen sich alle dem Fachmann geläufigen, üblichen Initiatoren. Beispiele für Radikalquellen sind Peroxide, Hydroperoxide und Azoverbindungen, zum Beispiel Dibenzoylperoxid, Cumolhydroperoxid, Cyclohexanonperoxid, Di-t-butylperoxid, Cyclohexylsulfonylacetylperoxid, Diisopropylpercarbonat, t-Butylperoktoat, Benzpinacol. In einer sehr bevorzugten Vorgehensweise wird als radikalischer Initiator 2,2'-Azobis(2-methylbutyronitril) oder 2,2'-Azobis(2-methylpropionitril) (2,2'-Azobisisobutyronitril; AIBN) verwendet.

Als Lösungsmittel für die Herstellung der Poly(meth)acrylate kommen Alkohole wie Methanol, Ethanol, n-und iso-Propanol, n-und iso-Butanol, vorzugsweise Isopropanol und/oder Isobutanol, sowie Kohlenwasserstoffe wie Toluol und insbesondere Benzine eines Siedebereichs von 60 bis 120 °C in Frage. Ferner können Ketone wie vorzugsweise Aceton, Methylethylketon, Methylisobutylketon und Ester wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsmittelgemisch, enthalten, vorgezogen werden.

Erfindungsgemäß bevorzugt erfolgt nach der Herstellung (Polymerisation) der Poly(meth)acrylate eine Aufkonzentration, und die weitere Verarbeitung der Poly(meth)acrylate erfolgt im Wesentlichen lösemittelfrei. Die Aufkonzentration des Polymerisats kann in Abwesenheit von Vernetzer- und Beschleunigersubstanzen geschehen. Es ist aber auch möglich, eine dieser Substanzklassen dem Polymerisat bereits vor der Aufkonzentration zuzusetzen, so dass die Aufkonzentration dann in Gegenwart dieser Substanz(en) erfolgt.

Die Polymerisate können nach dem Aufkonzentrationsschritt in einen Compounder überführt werden. Gegebenenfalls können die Aufkonzentration und die Compoundierung auch im selben Reaktor stattfinden.

Die gewichtsmittleren Molekulargewichte M_{W} der Poly(meth)acrylate der geschäumten Haftklebmasse des Klebebandes (A) liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Die Angaben des mittleren Molekulargewichtes M_{W} und der Polydispersität PD in dieser Schrift beziehen sich auf die Bestimmung per Gelpermeationschromatographie. Es kann vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Das Poly(meth)acrylat hat vorzugsweise einen K-Wert von 30 bis 90, besonders bevorzugt von 40 bis 70, gemessen in Toluol (1%ige Lösung, 21 °C). Der K-Wert nach Fikentscher ist ein Maß für das Molekulargewicht und die Viskosität des Polymerisats.

Erfindungsgemäß ebenfalls geeignet sind Poly(meth)acrylate, die eine enge Molekulargewichtsverteilung (Polydispersität PD < 4) haben. Diese Massen haben trotz eines relativ niedrigen Molekulargewichts nach dem Vernetzen eine besonders gute Scherfestigkeit. Zudem ermöglicht die niedrigere Polydispersität eine leichtere Verarbeitung aus der Schmelze, da die Fließviskosität gegenüber einem breiter verteilten Poly(meth)acrylat bei weitgehend gleichen Anwendungseigenschaften geringer ist. Eng verteilte Poly(meth)acrylate können vorteilhaft durch anionische Polymerisation oder durch kontrollierte radikalische Polymerisationsmethoden hergestellt werden, wobei letztere besonders gut geeignet sind. Auch über N-Oxyle lassen sich entsprechende Poly(meth)acrylate herstellen. Daneben lässt sich die Atom Transfer Radical Polymerization (ATRP) in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion der Halogenide Cu-, Ni-, Fe-, Pd-, Pt-, Ru-, Os-, Rh-, Co-, Ir-, Ag- oder Au-Komplexe eingesetzt werden.

Das bzw. die Poly(meth)acrylat(e) der geschäumten Haftklebmasse des Klebebandes (A) ist/sind bevorzugt vernetzt. Zwar lassen sich dicke Masseschichten - wegen der mit fortschreitender Eindringtiefe rasch abnehmenden Strahlungsintensität - kaum über die übliche Elektronenstrahlen- oder UV-Strahlenbehandlung homogen vernetzen, aber eine thermische Vernetzung schafft hierfür hinreichende Abhilfe. Die geschäumte Haftklebmasse des Klebebandes (A) ist daher bevorzugt thermisch vernetzt. Als dicke Masseschichten werden insbesondere solche Schichten angesehen, die mehr als 150 µm dick sind.

Bevorzugt sind die Poly(meth)acrylate der geschäumten Haftklebmasseschicht des Klebebandes (A) mit Isocyanaten, insbesondere mit trimerisierten Isocyanaten und/oder blockierungsmittelfreien und sterisch gehinderten Isocyanaten, und/oder Epoxidverbindungen vernetzt, jeweils bei Anwesenheit funktioneller Gruppen in den Polymer-Makromolekülen, die mit Isocyanatgruppen bzw. Epoxidgruppen reagieren können.

Um die Reaktivität der Isocyanate abzuschwächen, können vorteilhaft mit thermisch abspaltbaren funktionellen Gruppen blockierte Isocyanate eingesetzt werden. Zur Blockierung werden bevorzugt aliphatische primäre und sekundäre Alkohole, Phenolderivate, aliphatische primäre und sekundäre Amine, Lactame, Lactone und Malonsäureester verwendet.

Werden Epoxid-Amin-Systeme als Vernetzersysteme eingesetzt, können die Amine in ihre Salze überführt werden, um eine Erhöhung der Topfzeit zu gewährleisten. Dabei werden leicht flüchtige organische Säuren (z.B. Ameisensäure, Essigsäure) oder leicht flüchtige Mineralsäuren (z.B. Salzsäure, Derivate der Kohlensäure) zur Salzbildung bevorzugt.

Ein grundsätzliches Problem beim Einsatz thermischer Vernetzer bei der Herstellung der geschäumten Haftklebmasse des Klebebandes (A) ergibt sich aus der zur Expansion der Mikroballons benötigten Temperaturerhöhung. Die Wahl der oben genannten, relativ reaktionsträgen Vernetzer, besonders bevorzugt zusammen mit Beschleuniger-Systemen zur Regulierung der Kinetik der Vernetzungsreaktion, ist besonders vorteilhaft, da mit diesen Vernetzern die für die Schäumung erforderlichen Temperaturen angewendet werden können, ohne dass das Massesystem Schaden nimmt.

Als besonders bevorzugt für die geschäumte Haftklebmasse des Klebebandes (A) hat sich ein Vernetzer-Beschleuniger-System herausgestellt, das zumindest eine epoxidgruppenhaltige Substanz als Vernetzer und zumindest eine bei einer Temperatur unterhalb der Schmelztemperatur des Poly(meth)acrylats für die Verknüpfungsreaktion beschleunigend wirkende Substanz als Beschleuniger umfasst. Das System setzt einen Gehalt der Polymere an funktionellen Gruppen voraus, die mit Epoxidgruppen Vernetzungsreaktionen eingehen können. Als epoxidgruppenhaltige Substanzen eigenen sich multifunktionelle Epoxide, insbesondere bifunktionelle oder trifunktionelle (also solche Epoxide mit zwei bzw. drei Epoxidgruppen), aber auch höherfunktionelle Epoxide oder Mischungen unterschiedlich funktioneller Epoxide. Als Beschleuniger können bevorzugt Amine (formell als Substitutionsprodukte des Ammoniaks aufzufassen), beispielweise primäre und/oder sekundäre Amine; insbesondere tertiäre und/oder multifunktionelle Amine eingesetzt werden. Einsetzbar sind auch Substanzen, die mehrere Amingruppen aufweisen, wobei diese Amingruppen primäre und/oder sekundäre und/oder tertiäre Amingruppen sein können, insbesondere Diamine, Triamine und/oder Tetramine. Insbesondere werden solche Amine gewählt, die mit den Polymerbausteinen keine oder nur geringfügige Reaktionen eingehen. Als Beschleuniger können weiterhin beispielweise solche auf Phosphorbasis, wie Phosphine und/oder Phosphoniumverbindungen, eingesetzt werden.

Als funktionelle Gruppen des zu vernetzenden Poly(meth)acrylats eigenen sich besonders Säuregruppen (beispielsweise Carbonsäure-, Sulfonsäure- und/oder Phosphonsäuregruppen) und/oder Hydroxygruppen und/oder Säureanhydridgruppen und/oder Epoxidgruppen und/oder Amingruppen. Es ist besonders vorteilhaft, wenn das Polymer einpolymerisierte Acrylsäure und/oder Methacrylsäure enthält.

Es kann jedoch auch vorteilhaft sein, auf Beschleuniger zu verzichten, da diese zum Beispiel zum Vergilben neigen können (insbesondere stickstoffhaltige Substanzen). Als Vernetzer, die ohne Beschleunigerzusatz auskommen, eignen sich beispielweise Epoxycyclohexylderivate, insbesondere bei Anwesenheit von Carbonsäuregruppen im zu vernetzenden Poly(meth)acrylat. Dies kann zum Beispiel durch mindestens 5 Gew.-% einpolymerisierte Acrylsäure in das Polymer realisiert sein. In dem zu vernetzenden Polymer sind vorteilhaft insbesondere keine Protonenakzeptoren, keine Elektronenpaar-Donatoren (Lewisbasen) und/oder keine Elektronenpaarakzeptoren (Lewissäuren) zugegen. Die Abwesenheit dieser Substanzen bezieht sich dabei insbesondere auf extern zugesetzte, also nicht einpolymerisierte bzw. in das Polymergerüst eingebaute Beschleuniger; besonders bevorzugt sind aber weder extern zugesetzte noch einpolymerisierte, insbesondere gar keine Beschleuniger zugegen. Als besonders vorteilhafte Vernetzer haben sich Epoxycyclohexylcarboxylate wie (3,4-Epoxycyclohexan)methyl-3,4-epoxycyclohexylcarboxylat herausgestellt.

Die geschäumte Haftklebmasse des Klebebandes (A) kann neben dem bzw. den Poly(meth)acrylat(en) auch ein oder mehrere weitere Polymere enthalten. Dazu zählen beispielsweise Acrylat-unlösliche Polymere wie Polyolefine (z.B. LDPE, HDPE, Polypropylen), Polyolefin-Copolymere (z.B. Ethylen-Propylen-Copolymere), Polyester, Copolyester, Polyamide, Copolyamide, fluorierte Polymere, Polyalkylenoxide, Polyvinylalkohol, Ionomere (bspw. mit Base neutralisierte Ethylen-Methacrylsäure-Copolymere), Celluloseacetat, Polyacrylnitril, Polyvinylchlorid, thermoplastische Polyurethane, Polycarbonate, ABS-Copolymere und Polydimethylsiloxane. Weitere geeignete Polymere sind Polybutadien, Polyisopren, Polychloropren und Copolymere von Styrol und Dienen. Daneben sind Polymere geeignet, die inhärent haftklebrig sind oder durch den Zusatz von Klebkraftverstärkern haftklebrig gemacht werden können, beispielsweise Poly-α-Olefine wie Polyocten, Polyhexen und ataktisches Polypropylen; spezielle Blockcopolymere (Diblock-, Triblock-, sternförmige Blockcopolymere und Kombinationen davon), Natur- und Synthesekautschuke, Silicone und Ethylenvinylacetat.

In einer speziellen Ausführungsform enthält die geschäumte Haftklebmasse des Klebebandes (A) 15 bis 50 Gew.-% mindestens eines Synthesekautschuks. Bevorzugt ist Synthesekautschuk zu 20 bis 40 Gew.-%, jeweils bezogen auf das Gesamtgewicht der Haftklebmasse, enthalten.

Bevorzugt ist in dieser Ausführungsform mindestens ein Synthesekautschuk der geschäumten Haftklebmasse des Klebebandes (A) ein Blockcopolymer mit einem Aufbau A-B, A-B-A, (AB)ₙ, (A-B)ₙX oder (A-B-A)ₙX,
worin
- die Blöcke A unabhängig voneinander für ein Polymer, gebildet durch Polymerisation mindestens eines Vinylaromaten;
- die Blöcke B unabhängig voneinander für ein Polymer, gebildet durch Polymerisation von konjugierten Dienen mit 4 bis 18 C-Atomen und/oder Isobutylen, oder für ein teil- oder vollhydriertes Derivat eines solchen Polymers;
- X für den Rest eines Kopplungsreagenzes oder Initiators und
- n für eine ganze Zahl ≥ 2 stehen.

Insbesondere sind in dieser Ausführungsform alle Synthesekautschuke der geschäumten Haftklebmasse des Klebebandes (A) Blockcopolymere mit einem Aufbau wie vorstehend dargelegt. Die geschäumte Haftklebmasse des Klebebandes (A) kann somit auch Gemische verschiedener Blockcopolymere mit einem Aufbau wie vorstehend enthalten.

Geeignete Blockcopolymere (Vinylaromatenblockcopolymere) umfassen also vorzugsweise einen oder mehrere gummiartige Blöcke B (Weichblöcke) und einen oder mehrere glasartige Blöcke A (Hartblöcke). Besonders bevorzugt ist mindestens ein Synthesekautschuk der geschäumten Haftklebmasse des Klebebandes (A) ein Blockcopolymer mit einem Aufbau AB, A-B-A, (A-B)₃X oder (A-B)₄X, wobei für A, B und X die vorstehenden Bedeutungen gelten. Ganz besonders bevorzugt sind alle Synthesekautschuke der geschäumten Haftklebmasse des Klebebandes (A) Blockcopolymere mit einem Aufbau A-B, A-B-A, (A-B)₃X oder (A-B)₄X, wobei für A, B und X die vorstehenden Bedeutungen gelten. Insbesondere ist der Synthesekautschuk der geschäumten Haftklebmasse des Klebebandes (A) ein Gemisch aus Blockcopolymeren mit einem Aufbau A-B, A-B-A, (A-B)₃X oder (A-B)₄X, das bevorzugt mindestens Diblockcopolymere A-B und/oder Triblockcopolymere A-B-A enthält.

Der Block A ist generell ein glasartiger Block mit einer bevorzugten Glasübergangstemperatur (Tg, DSC), die oberhalb der Raumtemperatur liegt. Besonders bevorzugt liegt die Tg des glasartigen Blockes bei mindestens 40 °C, insbesondere bei mindestens 60 °C, ganz besonders bevorzugt bei mindestens 80 °C und äußerst bevorzugt bei mindestens 100 °C. Der Anteil an Vinylaromatenblöcken A an den gesamten Blockcopolymeren beträgt bevorzugt 10 bis 40 Gew.-%, besonders bevorzugt 20 bis 33 Gew.-%. Vinylaromaten zum Aufbau des Blocks A umfassen bevorzugt Styrol, α-Methylstyrol und/oder andere Styrol-Derivate. Der Block A kann somit als Homo- oder Copolymer vorliegen. Besonders bevorzugt ist der Block A ein Polystyrol.

Das Vinylaromatenblockcopolymer weist weiterhin generell einen gummiartigen Block B bzw. Weichblock mit einer bevorzugten Tg von kleiner als Raumtemperatur auf. Die Tg des Weichblocks ist besonders bevorzugt kleiner als 0 °C, insbesondere kleiner als -10 °C, beispielsweise kleiner als -40 °C und ganz besonders bevorzugt kleiner als -60 °C.

Bevorzugte konjugierte Diene als Monomere für den Weichblock B sind insbesondere ausgewählt aus der Gruppe bestehend aus Butadien, Isopren, Ethylbutadien, Phenylbutadien, Piperylen, Pentadien, Hexadien, Ethylhexadien, Dimethylbutadien und den Farnesen-Isomeren sowie beliebigen Mischungen dieser Monomere. Auch der Block B kann als Homopolymer oder als Copolymer vorliegen.

Besonders bevorzugt sind die konjugierten Diene als Monomere für den Weichblock B ausgewählt aus Butadien und Isopren. Beispielsweise ist der Weichblock B ein Polyisopren, ein Polybutadien oder ein teil- oder vollhydriertes Derivat eines dieser beiden Polymere wie insbesondere Polybutylenbutadien; oder ein Polymer aus einem Gemisch aus Butadien und Isopren. Ganz besonders bevorzugt ist der Block B ein Polybutadien.

Die im Klebeband (A) zwingend enthaltene Haftklebmasseschicht kann, muss aber nicht identisch mit der bevorzugt enthaltenen geschäumten Haftklebmasseschicht des Klebebandes (A) sein. Die "Haftklebmasseschicht des Klebebandes (A)" bzw. die Formulierung "Klebeband (A), enthaltend eine Haftklebmasseschicht" bedeutet, dass die haftklebrigen Eigenschaften dieser Haftklebmasseschicht nach außen, d.h. gegenüber einem Substrat wirksam werden können. Folglich verbindet diese Haftklebmasseschicht nicht zwei andere Schichten des Klebebandes (A) miteinander, sondern ist als eine Außenschicht des Klebebandes (A) anzusehen.

In einer Ausführungsform umfasst das Klebeband (A) eine geschäumte Haftklebmasseschicht, und die geschäumte Haftklebmasseschicht ist die Haftklebmasseschicht des Klebebandes (A). Dies ist vorteilhaft, weil die geschäumte Haftklebmasse in der Lage ist, Unebenheiten auf der Substratoberfläche zu kompensieren und somit auch auf derartigen Oberflächen gleichmäßige Verklebungen zu realisieren.

In einer weiteren Ausführungsform umfasst das Klebeband (A) eine geschäumte Haftklebmasseschicht, und die geschäumte Haftklebmasseschicht des Klebebandes (A) ist ein Trägermaterial, auf dessen einer Seite die hitzeaktivierbare Klebmasseschicht und auf dessen anderer Seite die Haftklebmasseschicht angeordnet ist. Dies ist vorteilhaft, weil sich positive Eigenschaften des geschäumten Trägermaterials mit solchen der Haftklebmasse kombinieren lassen und auf diese Weise sehr leistungsstarke Klebschichten erhalten werden können.

Unter einer "hitzeaktivierbaren Klebmasseschicht" (im Folgenden auch synonym als "hitzeaktivierbare Klebmasse" bezeichnet) wird eine Schicht einer Klebmasse verstanden, die bei Raumtemperatur nicht klebrig ist und erst durch Erhitzen genügend Adhäsion zu einem Substrat aufbauen kann, um eine klebende Verbindung mit diesem zu bewirken. Unter "Erhitzen" wird üblicherweise das Einwirken einer Temperatur im Bereich von etwa 60 bis etwa 200 °C, erfindungsgemäß insbesondere im Bereich von 120°C bis 200°C verstanden.

Bevorzugt ist die hitzeaktivierbare Klebmasseschicht des Klebebandes (A) eine Polyolefinschicht. Das Polyolefin kann auf ein oder mehrere Olefinmonomere zurückgeführt werden. Bevorzugt ist das Material der hitzeaktivierbaren Klebmasseschicht ausgewählt aus Polyethylen, Polypropylen, Ethylen-Propylen-Copolymeren und Mischungen dieser Polymere. Besonders bevorzugt ist das Material der hitzeaktivierbaren Klebmasseschicht Polypropylen.

Das Klebeband (A) wird bevorzugt zum Verkleben von Kunststoffteilen auf Glas oder lackierten Substraten verwendet, beispielsweise im Automobilbau. Zum Beispiel kann das Klebeband (A) zum Verkleben sogenannter Weather Strips eingesetzt werden. Besonders bevorzugt wird das Klebeband (A) zum Verkleben von Kunststoffprofilen auf Glasscheiben oder Karosserieteilen von Fahrzeugen verwendet, insbesondere zum Verkleben von Dichtungen im Türbereich und/oder von Gummi- und anderen Kunststofflippen an Glasscheiben.

Das erfindungsgemäße Verbundsystem umfasst weiter einen auf der Haftklebmasseschicht des Klebebandes (A) aufliegenden Releaseliner. Der Aufbau dieses Releaseliners ist erfindungsgemäß unkritisch. Prinzipiell kommt jeder Releaseliner in Frage, der gegenüber der Haftklebmasse des Klebebandes (A) die übliche Schutzfunktion wahrnehmen kann, die Haftklebmasse und die sonstigen Komponenten des Verbundsystems nicht signifikant negativ beeinträchtigt und sich in üblicher Weise vor der Applikation von der Haftklebmasse wieder entfernen lässt.

Als Trennbeschichtung des Releaseliners kommen alle dem Fachmann bekannten Systeme in Frage, beispielsweise Silikone, fluorierte Silikone, Silikon-Copolymere, Wachse, Carbamate, Polyolefine oder Mischungen aus zwei oder mehr der genannten Stoffe.

Weiter umfasst das erfindungsgemäße Verbundsystem ein Klebeband (B), das eine Trägerschicht, eine Trennschicht auf einer Seite der Trägerschicht und eine Haftklebmasseschicht auf der der Trennschicht gegenüberliegenden Seite der Trägerschicht enthält.

Das Klebeband (B) ist bevorzugt breiter als das Klebeband (A) und als der auf dessen Haftklebmasseschicht aufliegende Releaseliner und weist ebenfalls bevorzugt zu beiden Seiten des Klebebandes (A) und des Releaseliners einen Überstand auf. Dies bedeutet, dass das Klebeband (B) links und rechts vom Bahnverlauf des Klebebandes (A) dieses und den auf dessen Haftklebmasse aufliegenden Releaseliner vollständig bedeckt und noch über deren Seitenkanten hinausreicht. Das Klebeband (B) fungiert somit als "Interliner" im oben beschriebenen Sinne. Der Überstand muss nicht zwingend auf beiden Seiten des Klebebandes (A) und des Releaseliners gleich groß sein, d.h. es ist auch eine "asymmetrische Bedeckung" dieses Verbundes durch das Klebeband (B) möglich.

Als Material der Trägerschicht des Klebebandes (B) kommt grundsätzlich jedes Material in Frage, das als Träger für eine Haftklebmasse und eine Releasebeschichtung geeignet ist und darüber hinaus genügend flexibel ist, um problemlos zu einer Spule aufgewickelt werden zu können. Bevorzugt ist die Trägerschicht des Klebebandes (B) eine Polyolefinfolie insbesondere eine Polypropylenfolie, beispielsweise eine Folie aus einem monoaxial verstrecktem Polypropylen (MOPP).

Auf einer Seite der Trägerschicht des Klebebandes (B) ist eine Trennschicht aufgebracht. Für diese Trennschicht kommen alle dem Fachmann bekannten Systeme, beispielsweise Silikone, fluorierte Silikone, Silikon-Copolymere, Wachse, Carbamate, Polyolefine oder Mischungen aus zwei oder mehr der genannten Stoffe, in Frage.

Weiter enthält das Klebeband (B) eine Haftklebmasseschicht auf der der Trennschicht gegenüberliegenden Seite der Trägerschicht. Grundsätzlich sind die Ausgestaltung und die Materialbasis der Haftklebmasseschicht beliebig, solange das Klebeband (B) über seine Haftklebmasseschicht zum Klebeband (A) bzw. zu dessen hitzeaktivierbarer Klebmasseschicht eine Klebkraft nach EN 1939:2003 von maximal 5 N/cm, bevorzugt von maximal 1 N/cm, stärker bevorzugt von 0,02 N/cm bis 1 N/cm, besonders bevorzugt von 0,1 N/cm bis 1 N/cm aufweist. Es handelt sich dabei um eine gering ausgeprägte Klebkraft, die mit der Funktion des Klebebandes (B) als Interliner korrespondiert und es daher ermöglicht, das Klebeband (B) mit einem nur geringen Kraftaufwand von der hitzeaktivierbaren Klebmasseschicht des Klebebandes (A) zu entfernen. Die Klebkraft ist aber ausreichend, um ein Verbundsystem bereitzustellen, das stabil durch ein Schneidwerk und von diesem über diverse Umlenkrollen zur Spulenaufwicklung geführt werden kann und das ein Abrutschen bzw. Verrutschen des Interliners vom bzw. auf dem Klebeband (A) verhindert.

Die Haftklebmasseschicht des Klebebandes (B) enthält Naturkautschuk oder Poly(meth)acrylat als Hauptbestandteil. Für den Fall, dass Naturkautschuk der Hauptbestandteil ist, enthält die Haftklebmasseschicht des Klebebandes (B) bevorzugt mindestens ein Klebharz.

Der Schichtenaufbau des Klebebandes (B) umfasst bevorzugt eine Haftvermittlerschicht zwischen der Trägerschicht und der Haftklebmasseschicht. Die Herstellung des entsprechenden Klebebandes (B) kann in zwei Schritten erfolgen. Im ersten Schritt wird die Trägerschicht mit einem Trennlack auf ihrer einen Seite und mit einer Haftvermittlerschicht auf ihrer anderen Seite beschichtet. Im zweiten Schritt wird die Haftklebmasseschicht auf die Haftvermittlerschicht aufgebracht.

Ein weiterer Gegenstand der Erfindung ist ein Verfahren zur Herstellung eines erfindungsgemäßen Verbundsystems, das die folgenden Schritte umfasst:
a) Schneiden eines zu einer Rolle aufgewickelten Verbundes aus
   - einem Klebeband (A), enthaltend
      - eine Haftklebmasseschicht und
      - eine hitzeaktivierbare Klebmasseschicht; und
   - einem auf der Haftklebmasseschicht des Klebebandes (A) aufliegenden Releaseliner
   derart, dass aus einer Mutterrolle mehrere Rollen mit im Vergleich zur Mutterrolle geringerer Bahnbreite erhalten werden;
b) Abrollen der Rollen und Bedecken mehrerer der derart erhaltenen Bahnen mit einem Klebeband (B), enthaltend
   - eine Trägerschicht,
   - eine Trennschicht auf einer Seite der Trägerschicht und
   - eine Haftklebmasseschicht auf der der Trennschicht gegenüberliegenden Seite der Trägerschicht
   derart, dass sich die Haftklebmasseschicht des Klebebandes (B) in unmittelbarem Kontakt mit der hitzeaktivierbaren Klebmasseschicht des Klebebandes (A) befindet;
c) Schneiden des Klebebandes (B) derart, dass separate, wieder zu Rollen wickelbare Verbundsysteme aus Klebeband (B), Klebeband (A) und Releaseliner erhalten werden; wobei das Klebeband (B) zu der hitzeaktivierbaren Klebmasseschicht des Klebebandes (A) eine Klebkraft von maximal 5 N/cm, ermittelt nach EN 1939:2003, aufweist.

Gegenstand der Erfindung ist auch die Verwendung eines Klebebandes (B), das
- eine Trägerschicht,
- eine Trennschicht auf einer Seite der Trägerschicht und
- eine Haftklebmasseschicht auf der der Trennschicht gegenüberliegenden Seite der Trägerschicht enthält,
zum Bedecken eines beidseitig nichtklebend ausgerüsteten, bahnförmigen Materials während des Aufwickelns dieses Materials zu einer Rolle und/oder während der Lagerung dieser Rolle, wobei sich die Haftklebmasseschicht des Klebebandes (B) in unmittelbarem Kontakt mit einer der nichtklebend ausgerüsteten Seiten des bahnförmigen Materials befindet. Insbesondere ist eine Seite des beidseitig nichtklebend ausgerüsteten, bahnförmigen Materials eine hitzeaktivierbare Klebmasseschicht, und die Haftklebmasseschicht des Klebebandes (B) befindet sich in unmittelbarem Kontakt mit dieser hitzeaktivierbaren Klebmasseschicht.

### Beispiel

Zur Herstellung des Klebebandes (A) im Sinne der vorliegenden Erfindung wurde eine 40 µm dicke Polypropylen-Blasfolie einseitig einer CO₂-Koronabehandlung unterzogen und mit der derart behandelten Seite auf ein kommerziell erhältliches, doppelseitiges Acrylat-Schaumklebeband (tesa^{®} ACXplus 6808) kaschiert. Eine entsprechende Mutterrolle wurde entrollt, aus der Bahn wurden mehrere 8 mm breite Bahnen geschnitten, die nebeneinander geführt wurden. Auf die Polypropylen-Blasfolie jeder Bahn wurde als Klebeband (B) im Sinne der vorliegenden Erfindung (Interliner) ein kommerziell erhältliches Strapping-Klebeband (tesa^{®} Strapping 51128) auf Basis einer rückseitig mit einer Carbamat-Trennschicht versehenen Soft MOPP-Folie und einer Naturkautschukklebmasse derart aufgebracht (klebende Seite des Strapping Tapes auf die Polypropylen-Blasfolie), dass das Strapping Tape zunächst sämtliche Bahnen übergreifend bedeckte. Der erhaltene Verbund wurde durch ein weiteres Schneidwerk geführt. Nach dem Durchlaufen des Schneidwerks lagen einzelne Bahnen des 8 mm breiten Verbundes aus tesa^{®} ACXplus 6808 und der Polypropylen-Blasfolie vor, die mit einer 19 mm breiten Bahn des Strapping Tapes derart bedeckt waren, dass das Strapping Tape auf jeder Seite um 5,5 mm überstand.

Die Klebkraft zwischen Strapping Tape und dem Verbund aus tesa^{®} ACXplus 6808 und der Polypropylen-Blasfolie wurde nach EN 1939:2003 zu 0,9 N/cm ermittelt.

### Vergleichsbeispiel

Zur Herstellung des Klebebandes (A) im Sinne der vorliegenden Erfindung wurde eine 40 µm dicke Polypropylen-Blasfolie einseitig einer CO₂-Koronabehandlung unterzogen und mit der derart behandelten Seite auf ein kommerziell erhältliches, doppelseitiges Acrylat-Schaumklebeband (tesa^{®} ACXplus 6808) kaschiert. Eine entsprechende Mutterrolle wurde entrollt, aus der Bahn wurden mehrere 8 mm breite Bahnen geschnitten, die nebeneinander geführt wurden. Auf die Polypropylen-Blasfolie jeder Bahn wurde als Interliner eine einseitig mit einer UV-vernetzten, lösemittelfrei aufgetragenen Silikon-Releaseschicht beschichtete, 55 µm dicke LDPE-Folie derart aufgebracht, dass der Interliner zunächst sämtliche Bahnen übergreifend bedeckte. Der erhaltene Verbund wurde durch ein weiteres Schneidwerk geführt. Nach dem Durchlaufen des Schneidwerks lagen einzelne Bahnen des 8 mm breiten Verbundes aus tesa^{®} ACXplus 6808 und der Polypropylen-Blasfolie vor, die mit einer 19 mm breiten Bahn des Interliners derart bedeckt waren, dass der Interliner auf jeder Seite um 5,5 mm überstand.

Aus dem Verbund aus Klebeband und Interliner des erfindungsgemäßen Beispiels ließen sich die einzelnen Bahnen problemlos und dimensionsstabil schneiden und über die Anlage führen. Im Vergleichsbeispiel kam es zu Unregelmäßigkeiten, so dass die angegebene Breite des überstehenden Interliners eher als Zielgröße und weniger als der tatsächlich durchgängig erreichte Wert anzusehen ist.

Die jeweils erhaltenen Bahnen des erfindungsgemäßen und des Vergleichsbeispiels wurden zu Spulen mit einer Bahnlänge von 1400 m kreuzgewickelt, die an jedem Ende einen Überstand des Spulenkerns von 2 cm aufwiesen. Die Spulen wurden in Kartons verpackt, jeweils 5 Kartons wurden aufeinandergestapelt und 6 solcher Stapel durch eine Folie miteinander verbunden. Diese Verbünde wurden auf der Ladefläche eines Fahrzeugs über eine identische Strecke von 10 km transportiert. Anschließend wurde der Zustand der Spulen bewertet. Es zeigte sich, dass die erfindungsgemäßen Spulen vollständig intakt waren und insbesondere noch den Überstand des Spulenkerns an beiden Enden sowie eine stabile Wicklung aufwiesen.

Die aufgewickelten Bahnen des Vergleichsbeispiels dagegen waren nach unten verrutscht, so dass der Spulenkernüberstand nur noch am oberen Ende vorhanden war. Die aufgewickelten Lagen waren zum Teil ineinander verschoben, es war dadurch zu Verklebungen der Lagen untereinander gekommen (verblocken), die Spule ließ sich nicht mehr befriedigend entrollen und verwenden.

## Patentansprüche

1. Verbundsystem, umfassend
- ein Klebeband (A), enthaltend
- eine Haftklebmasseschicht und
- eine hitzeaktivierbare Klebmasseschicht;
- einen auf der Haftklebmasseschicht des Klebebandes (A) aufliegenden Releaseliner; und
- ein Klebeband (B), enthaltend
- eine Trägerschicht,
- eine Trennschicht auf einer Seite der Trägerschicht und
- eine Haftklebmasseschicht auf der der Trennschicht gegenüberliegenden Seite der Trägerschicht;
wobei sich die Haftklebmasseschicht des Klebebandes (B) in unmittelbarem Kontakt mit der hitzeaktivierbaren Klebmasseschicht des Klebebandes (A) befindet und das Klebeband (B) zu der hitzeaktivierbaren Klebmasseschicht des Klebebandes (A) eine Klebkraft von maximal 5 N/cm, ermittelt nach EN 1939:2003, aufweist.

2. Verbundsystem gemäß Anspruch 1, **dadurch gekennzeichnet, dass** die Haftklebmasseschicht des Klebebandes (A) Poly(meth)acrylat als Hauptbestandteil enthält.

3. Verbundsystem gemäß mindestens einem der vorstehenden Ansprüche, **dadurch gekennzeichnet, dass**
das Klebeband (A) eine geschäumte Haftklebmasseschicht umfasst.

4. Verbundsystem gemäß Anspruch 3, **dadurch gekennzeichnet, dass** die geschäumte Haftklebmasseschicht des Klebebandes (A) zumindest teilweise expandierte Mikrohohlkugeln enthält.

5. Verbundsystem gemäß mindestens einem der Ansprüche 3 und 4, **dadurch gekennzeichnet, dass**
die geschäumte Haftklebmasseschicht die Haftklebmasseschicht des Klebebandes (A) ist.

6. Verbundsystem gemäß Anspruch 3, **dadurch gekennzeichnet, dass** die geschäumte Haftklebmasseschicht des Klebebandes (A) eine Trägerschicht ist, auf deren einer Seite die hitzeaktivierbare Klebmasseschicht und auf deren anderer Seite die Haftklebmasseschicht angeordnet ist.

7. Verbundsystem gemäß mindestens einem der vorstehenden Ansprüche, **dadurch gekennzeichnet, dass**
die hitzeaktivierbare Klebmasseschicht des Klebebandes (A) eine Polyolefinschicht ist.

8. Verbundsystem gemäß mindestens einem der vorstehenden Ansprüche, **dadurch gekennzeichnet, dass**
das Klebeband (B) breiter als das Klebeband (A) und als der auf dessen Haftklebmasseschicht aufliegende Releaseliner ist und zu beiden Seiten des Klebebandes (A) und des Releaseliners einen Überstand aufweist.

9. Verbundsystem gemäß mindestens einem der vorstehenden Ansprüche, **dadurch gekennzeichnet, dass**
die Trägerschicht des Klebebandes (B) eine Polyolefinfolie ist.

10. Verbundsystem gemäß mindestens einem der vorstehenden Ansprüche, **dadurch gekennzeichnet, dass**
die Haftklebmasseschicht des Klebebandes (B) Naturkautschuk oder Poly(meth)acrylat als Hauptbestandteil enthält.

11. Verfahren zur Herstellung eines Verbundsystems gemäß mindestens einem der vorstehenden Ansprüche, umfassend die folgenden Schritte:
a) Schneiden eines zu einer Rolle aufgewickelten Verbundes aus
- einem Klebeband (A), enthaltend
- eine Haftklebmasseschicht und
- eine hitzeaktivierbare Klebmasseschicht; und
- einem auf der Haftklebmasseschicht des Klebebandes (A) aufliegenden Releaseliner
derart, dass aus einer Mutterrolle mehrere Rollen mit im Vergleich zur Mutterrolle geringerer Bahnbreite erhalten werden;
b) Abrollen der Rollen und Bedecken mehrerer der derart erhaltenen Bahnen mit einem Klebeband (B), enthaltend
- eine Trägerschicht,
- eine Trennschicht auf einer Seite der Trägerschicht und
- eine Haftklebmasseschicht auf der der Trennschicht gegenüberliegenden Seite der Trägerschicht
derart, dass sich die Haftklebmasseschicht des Klebebandes (B) in unmittelbarem Kontakt mit der hitzeaktivierbaren Klebmasseschicht des Klebebandes (A) befindet;
c) Schneiden des Klebebandes (B) derart, dass separate, wieder zu Rollen wickelbare Verbundsysteme aus Klebeband (B), Klebeband (A) und Releaseliner erhalten werden;
wobei das Klebeband (B) zu der hitzeaktivierbaren Klebmasseschicht des Klebebandes (A) eine Klebkraft von maximal 5 N/cm, ermittelt nach EN 1939:2003, aufweist.

12. Verwendung eines Klebebandes (B), enthaltend
- eine Trägerschicht,
- eine Trennschicht auf einer Seite der Trägerschicht und
- eine Haftklebmasseschicht auf der der Trennschicht gegenüberliegenden Seite der Trägerschicht,
zum Bedecken eines beidseitig nichtklebend ausgerüsteten, bahnförmigen Materials während des Aufwickelns dieses Materials zu einer Rolle und/oder während der Lagerung dieser Rolle,
wobei sich die Haftklebmasseschicht des Klebebandes (B) in unmittelbarem Kontakt mit einer der nichtklebend ausgerüsteten Seiten des bahnförmigen Materials befindet.

## Claims

1. Composite system comprising
- an adhesive tape (A) comprising
- a pressure sensitive adhesive layer and
- a heat-activatable adhesive layer;
- a release liner situated on the pressure sensitive adhesive layer of the adhesive tape (A); and
- an adhesive tape (B) comprising
- a carrier layer,
- a release layer on one side of the carrier layer, and
- a pressure sensitive adhesive layer on the side of the carrier layer opposite from the release layer;
where the pressure sensitive adhesive layer of the adhesive tape (B) is in direct contact with the heat-activatable adhesive layer of the adhesive tape (A), and the adhesive tape (B) has a peel adhesion of not more than 5 N/cm, determined to EN 1939:2003, to the heat-activatable adhesive layer of the adhesive tape (A).

2. Composite system according to Claim 1, **characterized in that**
the pressure sensitive adhesive layer of the adhesive tape (A) comprises poly(meth)acrylate as principal constituent.

3. Composite system according to at least one of the preceding claims, **characterized in that**
the adhesive tape (A) comprises a foamed pressure sensitive adhesive layer.

4. Composite system according to Claim 3, **characterized in that** the foamed pressure sensitive adhesive layer of the adhesive tape (A) comprises at least partially expanded hollow microspheres.

5. Composite system according to at least one of Claims 3 and 4, **characterized in that**
the foamed pressure sensitive adhesive layer is the pressure sensitive adhesive layer of the adhesive tape (A) .

6. Composite system according to Claim 3, **characterized in that**
the foamed pressure sensitive adhesive layer of the adhesive tape (A) is a carrier layer, with the heat-activatable adhesive layer arranged on one side thereof and the pressure sensitive adhesive layer arranged on the other side thereof.

7. Composite system according to at least one of the preceding claims, **characterized in that**
the heat-activatable adhesive layer of the adhesive tape (A) is a polyolefin layer.

8. Composite system according to at least one of the preceding claims, **characterized in that**
the adhesive tape (B) is broader than the adhesive tape (A) and broader than the release liner situated on the pressure sensitive adhesive layer thereof, and overhangs the adhesive tape (A) and the release liner on both sides.

9. Composite system according to at least one of the preceding claims, **characterized in that**
the carrier layer of the adhesive tape (B) is a polyolefin film.

10. Composite system according to at least one of the preceding claims, **characterized in that**
the pressure sensitive adhesive layer of the adhesive tape (B) comprises natural rubber or poly(meth)acrylate as principal constituent.

11. Method for producing a composite system according to at least one of the preceding claims, comprising the following steps:
a) cutting a composite wound to a roll and composed of
- an adhesive tape (A) comprising
- a pressure sensitive adhesive layer and
- a heat-activatable adhesive layer; and
- a release liner situated on the pressure sensitive adhesive layer of the adhesive tape (A)
such that a plurality of rolls are obtained from a parent roll, the rolls having a web width lower than that of the parent roll;
b) unrolling the rolls and covering a plurality of the resultant webs with an adhesive tape (B) comprising
- a carrier layer,
- a release layer on one side of the carrier layer, and
- a pressure sensitive adhesive layer on the side of the carrier layer opposite from the release layer such that the pressure sensitive adhesive layer of the adhesive tape (B) is in direct contact with the heat-activatable adhesive layer of the adhesive tape (A);
c) cutting the adhesive tape (B) so as to form separate composite systems composed of adhesive tape (B), adhesive tape (A) and release liner, which can be wound back into rolls;
where the adhesive tape (B) has a peel adhesion of not more than 5 N/cm, determined to EN 1939:2003, to the heat-activatable adhesive layer of the adhesive tape (A).

12. Use of an adhesive tape (B) comprising
- a carrier layer,
- a release layer on one side of the carrier layer, and
- a pressure sensitive adhesive layer on the side of the carrier layer opposite from the release layer
to cover a material in web form which is non-adhesively furnished on both sides, during the winding of this material to a roll and/or during the storage of that roll,
where the pressure sensitive adhesive layer of the adhesive tape (B) is in direct contact with one of the non-adhesively furnished sides of the material in web form.

## Revendications

1. Système composite, comprenant
- un ruban adhésif (A), contenant
- une couche de masse adhésive sensible à la pression et
- une couche de masse adhésive thermoactivable ;
- une pellicule antiadhérente reposant sur la couche de masse adhésive sensible à la pression du ruban adhésif (A) ; et
- un ruban adhésif (B), contenant
- une couche de support,
- une couche de séparation sur un côté de la couche de support et
- une couche de masse adhésive sensible à la pression sur le côté de la couche de support opposé à la couche de séparation ;
la couche de masse adhésive sensible à la pression du ruban adhésif (B) étant en contact direct avec la couche de masse adhésive thermoactivable du ruban adhésif (A) et le ruban adhésif (B) sur la couche de masse adhésive thermoactivable du ruban adhésif (A) présentant une force d'adhésion d'au maximum 5 N/cm, déterminée selon EN 1939:2003.

2. Système composite selon la revendication 1, **caractérisé en ce que**
la couche de masse adhésive sensible à la pression du ruban adhésif (A) contient du poly(méth)acrylate comme constituant principal.

3. Système composite selon au moins l'une quelconque des revendications précédentes, **caractérisé en ce que** le ruban adhésif (A) comprend une couche de masse adhésive sensible à la pression moussée.

4. Système composite selon la revendication 3, **caractérisé en ce que** la couche de masse adhésive sensible à la pression moussée du ruban adhésif (A) contient des microsphères creuses au moins partiellement expansées.

5. Système composite selon au moins l'une quelconque des revendications 3 et 4, **caractérisé en ce que** la couche de masse adhésive sensible à la pression moussée est la couche de masse adhésive sensible à la pression du ruban adhésif (A).

6. Système composite selon la revendication 3, **caractérisé en ce que**
la couche de masse adhésive sensible à la pression moussée du ruban adhésif (A) est une couche de support sur un côté de laquelle est agencée la couche de masse adhésive thermoactivable et sur l'autre côté de laquelle est agencée la couche de masse adhésive sensible à la pression.

7. Système composite selon au moins l'une quelconque des revendications précédentes, **caractérisé en ce que** la couche de masse adhésive thermoactivable du ruban adhésif (A) est une couche de polyoléfine.

8. Système composite selon au moins l'une quelconque des revendications précédentes, **caractérisé en ce que** le ruban adhésif (B) est plus large que le ruban adhésif (A) et que la pellicule antiadhérente reposant sur sa couche de masse adhésive sensible à la pression et présente une saillie des deux côtés du ruban adhésif (A) et de la pellicule antiadhérente.

9. Système composite selon au moins l'une quelconque des revendications précédentes, **caractérisé en ce que** la couche de support du ruban adhésif (B) est un film de polyoléfine.

10. Système composite selon au moins l'une quelconque des revendications précédentes, **caractérisé en ce que** la couche de masse adhésive sensible à la pression du ruban adhésif (B) contient du caoutchouc naturel ou du poly(méth)acrylate comme constituant principal.

11. Procédé de préparation d'un système composite selon au moins l'une quelconque des revendications précédentes, comprenant les étapes suivantes :
a) la découpe d'un composite enroulé en un rouleau
- d'un ruban adhésif (A), contenant
- une couche de masse adhésive sensible à la pression et
- une couche de masse adhésive thermoactivable ; et
- une pellicule antiadhérente reposant sur la couche de masse adhésive sensible à la pression du ruban adhésif (A)
de telle manière que plusieurs rouleaux dont la largeur de bande est inférieure à celle du rouleau de base soient obtenus à partir d'un rouleau de base ;
B) le déroulement des rouleaux et le recouvrement de plusieurs des bandes ainsi obtenues avec un ruban adhésif (B), contenant
- une couche de support,
- une couche de séparation sur un côté de la couche de support et
- une couche de masse adhésive sensible à la pression sur le côté de la couche de support opposé à la couche de séparation
de telle manière que la couche de masse adhésive sensible à la pression du ruban adhésif (B) soit en contact direct avec la couche de masse adhésive thermoactivable du ruban adhésif (A) ;
c) la découpe du ruban adhésif (B) de manière à obtenir des systèmes composites séparés de ruban adhésif (B), de ruban adhésif (A) et de pellicule antiadhérente qui peuvent de nouveau être enroulés en rouleaux ;
où le ruban adhésif (B) sur la couche de masse adhésive thermoactivable du ruban adhésif (A) présente une force d'adhésion d'au maximum 5 N/cm, déterminée selon EN 1939:2003.

12. Utilisation d'un ruban adhésif (B), contenant
- une couche de support,
- une couche de séparation sur un côté de la couche de support et
- une couche de masse adhésive sensible à la pression sur le côté de la couche de support opposée à la couche de séparation,
pour recouvrir un matériau en forme de bande qui a été prévu non adhésif des deux côtés lors de l'enroulement de ce matériau pour former un rouleau et/ou lors du stockage de ce rouleau,
où la couche de masse adhésive sensible à la pression du ruban adhésif (B) est en contact direct avec l'un des côtés prévus non adhésifs du matériau en forme de bande.
